# EUROPEAN PATENT SPECIFICATION

(11) **EP 1 360 857 B1**
(45) Date of publication and mention of the grant of the patent: **25.05.2011**
(21) Application number: 02709332.7
(22) Date of filing: 04.02.2002
(51) Int. Cl.: H04M 1/00

(54) **ANTENNA SYSTEM FOR A WIRELESS INFORMATION DEVICE**
ANTENNENSYSTEM FÜR EINE DRAHTLOSE INFORMATIONSEINRICHTUNG
SYSTEME D'ANTENNES POUR DISPOSITIF D'INFORMATION SANS FIL

(30) Priority: 06.02.2001 US 777767
(43) Date of publication of application: 12.11.2003
(73) Proprietor: Motorola Mobility, Inc., Libertyville, IL 60048 (US)
(72) Inventor: CALLAWAY, Edgar, Herbert, Jr., Boca Raton, FL 33428-2413 (US)
(74) Representative: Cross, Rupert Edward Blount
(86) International application number: PCT/US2002/003268
(87) International publication number: WO 2002/063904

(56) References cited:
- EP-A2- 1 056 220
- JP-A- 2000 284 854
- US-A- 5 373 300
- US-A- 5 737 690
- US-A- 5 905 467
- US-A- 5 983 119
- US-A- 6 006 117
- US-B1- 6 175 723
- US-B1- 6 285 893
- US-B1- 6 295 462
- US-B1- 6 297 780

## Description

### BACKGROUND OF THE INVENTION

### FIELD OF THE INVENTION

This invention relates in general to antenna systems and in particular to antenna systems for wireless information devices.

### DESCRIPTION OF THE RELATED ART

The digital age has brought with it an abundance of options and availability of electronic information. Along with this explosion in electronic information is the availability of portable devices for using this information. For example, electronic books provide users with high quality electronic editions of books, magazines and newspapers. Users download over phone lines thousands of titles from the Internet site of the electronic book providers. As another example, portable web browsers provide users with access to the growing Internet sites to quickly and easily obtain whatever information they require wherever the user is and whenever it is needed usually via conventional telephone lines. The growing market for such portable electronic information devices has led to a growing popularity of wireless information. Wireless information devices allow the user the flexibility of access to the electronic information they desire or require without the additional requirement of telephone landline access.

Wireless information devices such as wireless web browsers and wireless electronic books can be used in multiple physical orientations relative to the user's body. The device can be oriented in the landscape format (short display side vertical), for such activities as web browsing or viewing slides, and then rotated to the portrait format (long display side vertical), for such activities as reading email or reading an electronic book. For maximum reading flexibility, some non-wireless electronic books allow the user to rotate the image in steps of ninety degrees so that, for example, the same side of the device can be held in either hand while reading.

Antenna design creates a challenge for the product designer of wireless information devices used for wireless web browsing or wireless electronic books. Since antenna performance is greatly dependent on the antenna's physical relationship with the body, achieving consistent antenna performance under the conditions surrounding the use of wireless information devices is challenging. No matter where the antenna is placed, depending upon the user's utilization of the product, the antenna can end up under the user's hand, or pressed against the body, resulting in reduced antenna performance.

One conventional approach to this design challenge is the use of antenna diversity. Antenna diversity involves choosing the best signal, or combination of signals, received from multiple antennas. One of the difficulties of this approach in portable products, getting enough space inside the product for the extra antennas, is less of a concern with wireless information devices, due the their relatively large size. However, diversity also requires additional power for the duplicate receiver signal paths required, and this can significantly affect product battery life. The addition of a duplicate receiver can also increase manufacturing cost of the device. There is also additional signal quality estimation that must be performed on the signal from each antenna. Lastly, a scheme for the choice of the proper transmit antenna is required. For these reasons, antenna diversity is not an optimum solution to this problem.

Alternatively, the product designer can either accept a reduction in wireless performance for some orientations of the wireless information device, or eliminate the ability for users to orient the wireless information device in the multiple orientations providing the most ergonomically pleasing orientation for each of a multiplicity of functions. Both of these options can reduce the utility and/or desirability of the wireless information device.

What is needed is an antenna system that allows the user to orient the wireless information device relative to the user's body in a multiplicity of orientations with consistent product performance without additional cost or size to the product.

EP patent application publication no. EP 1056220 describes a mobile communication terminal comprising a main body antenna on the upper end part of a main body, wherein a flip part for protecting an operation surface is provided, with a patch antenna provided on the front surface of the flip part. The orientation of the main body is detected by a tilt detecting device stored in the main body for selecting the antenna having the optimum antenna directivity with respect to the counterpart of the electric wave transmission and receipt terminal. In a configuration having a patch antenna on the rear surface of the flip part in addition to the patch antenna on the front surface, whether the flip part is opened or closed is detected by an opening/closure detecting device stored in a joint part of the flip part and the main body for switching the patch antennas provided on both sides of the flip part: the patch antenna provided on the flip front surface is selected when the flip part is closed and the patch antenna provided on the flip rear surface is selected when the flip part is opened.

### BRIEF DESCRIPTION OF THE SEVERAL VIEWS OF THE DRAWINGS

FIG. **1** is an electronic block diagram illustrating one embodiment of a wireless information communication system;
FIG. **2** is an electronic block diagram illustrating an alternative embodiment of a wireless information communication system;
FIG. **3** illustrates a wireless information device for use within the wireless information communication system of FIG. 1;
FIG. **4** is an electronic block diagram of a wireless information device for use within the wireless information communication system of FIG. 1 in accordance with the present invention; and
FIG. **5** is a flowchart illustrating one embodiment of the operation of the wireless information device of FIG. 3 in accordance with the present invention.

### DETAILED DESCRIPTION OF THE INVENTION

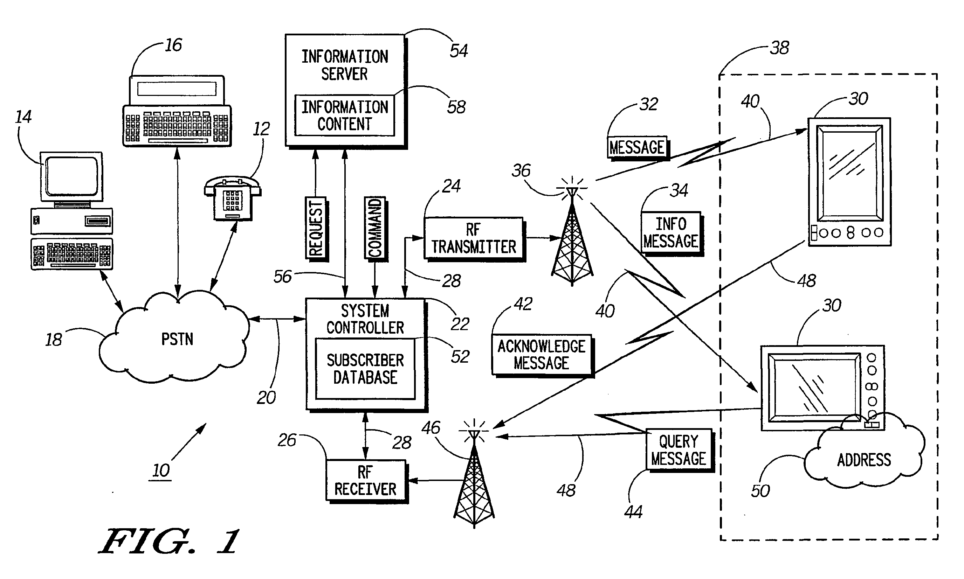

Referring to FIG. 1, an electronic block diagram of a wireless information communication system **10** is shown. The wireless information communication system **10** includes a message input device for initiating messages into the wireless information communication system **10.** The message input device can be, for example, a telephone **12,** a computer 14, or a desktop messaging unit **16,** connected through a conventional public switched telephone network (PSTN) **18** through a plurality of telephone links **20** to a system controller **22.** The telephone links **20,** for example, can be a plurality of twisted wire pairs, a fiber optic cable, or a multiplexed trunk line.

The system controller **22** is coupled to and oversees the operation of at least one radio frequency (RF) transmitter **24** and at least one radio frequency (RF) receiver **26** through one or more communication links **28.** The communication links **28** typically are twisted pair telephone wires, and additionally can include radio frequency (RF), microwave, or other communication links. The radio frequency transmitter **24** and the radio frequency receiver **26** typically are used with message store and forward stations that encode and decode inbound and outbound messages into formats that are compatible with landline message switched computers and personal radio addressing requirements, such as cellular messages, short messaging service, or paging protocols. The system controller **22** can also perform other functions; for example, it can encode and decode wireless messages that are transmitted to or received by the radio frequency transmitter **24** or the radio frequency receiver **26.** Telephony signals are typically transmitted to and received from the system controller **22** by telephone sets such as the telephone **12** or a wireless information device **30.** The system controller **22** encodes and schedules outbound messages such as a message **32** or an information message **34.** The system controller **22** then transmits the encoded outbound messages through the radio frequency transmitter **24** via a transmit antenna **36** to a plurality of wireless information devices **38** such as a wireless information device **30** on at least one outbound radio frequency (RF) channel **40.** The message **32** or the information message **34** can be, for example, a data message or a voice call. Similarly, the system controller **22** receives and decodes inbound messages such as an acknowledgement message **42** or a query message **44** received by the radio frequency receiver **26** via a receive antenna **46** on at least one inbound radio frequency (RF) channel **48** from one of the plurality of wireless information devices **38.** The acknowledgement message **42** or the query message **44** can be, for example, a data message, a reply to a data message, a voice call, or a reply to a voice call.

It will be appreciated by one of ordinary skill in the art that the wireless information communication system **10,** in accordance with the present invention, can function utilizing any wireless RF channel, for example, a one- or two-way pager channel, a mobile cellular telephone channel, or a mobile radio channel. Similarly, it will be appreciated by one of ordinary skill in the art that the wireless information communication system **10** can function utilizing other types of communication channels such as infrared channels. In the following description, the term "wireless information communication system" refers to any of the wireless information communication systems mentioned above or an equivalent.

Similarly, it will be appreciated by one of ordinary skill in the art that the wireless information device **30** in accordance with the present invention, can be a mobile cellular telephone, a mobile radio data terminal, a mobile cellular telephone having an attached data terminal, or a two-way pager, such as the "Pagewriter 2000X" manufactured by Motorola Inc. of Schaumburg, Illinois. In the following description, the term "wireless information device" refers to any of the devices mentioned above or an equivalent.

The wireless information device **30** assigned for use in the wireless information communication system **10** has an address **50** or identity assigned thereto which is a unique selective call address in the wireless information communication system **10.** It will be appreciated by one of ordinary skill in the art that other wireless information devices assigned for use in the wireless information communication system **10** have an address assigned thereto which is a unique selective call address in the wireless information communication system **10.**

The address **50** enables the transmission of the message **32** or the information message **34** from the system controller **22** only to the wireless information device **30** having the address **50,** and identifies the messages and responses such as the acknowledgement message **42** or the query message **44** received at the system controller **22** from the wireless information device 30 with the address **50.** In one embodiment, each of the plurality of wireless information devices **38** also has a pin number assigned thereto, the pin number being associated with a telephone number within the PSTN **18.** A list of the assigned addresses and correlated telephone numbers for each wireless information device **30** is stored in the system controller **22** in the form of a subscriber database **52.**

In a preferred embodiment of the present invention, the wireless information communication system **10** includes an information server **54** coupled to the system controller **22** via a server interface **56.** The information server **54** controls and manages communication of a plurality of information content **58** to the plurality of wireless information devices **38** by sending wireless messages to the plurality of wireless information devices **38.** The information content **58** can be, for example, electronic books, Internet web page information, or the like. The addition of the information server **54** to the wireless information communication system **10** enhances the operation of the wireless information communication system **10** by adding intelligence for the management of the information content **58** including the communication among and to the plurality of wireless information devices **38.**

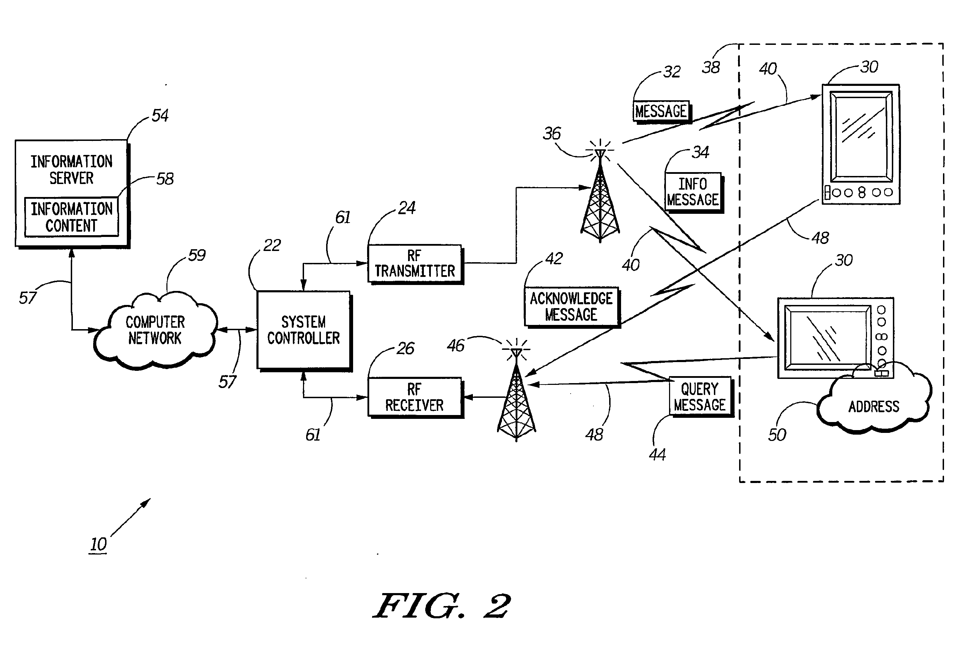

Referring to FIG. **2****,** an alternative embodiment of the wireless information communication system **10** includes the information server **54** as a source of the information content **58** to the wireless information communication system **10.** The information server **54** is coupled through a computer network **59** through a plurality of computer communication links **57** to the system controller **22.** The computer network **59,** for example, can be the Internet. The computer communication links **57,** for example, can be a plurality of twisted wire pairs, cable television cables, telephone Digital Subscriber Lines (DSL), fiber optic cables, or multiplexed trunk lines.

The system controller **22** is coupled to and oversees the operation of at least one radio frequency (RF) transmitter **24** and at least one radio frequency (RF) receiver **26** through one or more information communication links **61.** The information communication links **61** typically are metallic connections on a printed circuit board or integrated circuit, and additionally can include radio frequency (RF), microwave, or other communication links. The radio frequency transmitter **24** and the radio frequency receiver **26** typically encode and decode inbound and outbound messages into formats that are compatible with landline packet switched computers and personal radio addressing requirements, such as Wireless Personal Area Networks (WPANs) or Wireless Local Area Networks (WLANs). Examples of WPANs are networks based on the Bluetooth, HomeRF, and IEEE 802.15.3 protocols; examples of WLANs are networks based on the Hiperlan 2, IEEE 802.11 a, and 802.11.b protocols. The system controller **22** can also perform other functions; for example, it can encode and decode wireless messages that are transmitted to or received by the radio frequency transmitter **24** or the radio frequency receiver **26.** Telephony signals are typically transmitted to and received from the system controller **22** by the computer network **59** or the wireless information device **30.** The system controller **22** encodes and schedules outbound messages such as the message **32** or the information message **34.** The system controller **22** then transmits the encoded outbound messages through the radio frequency transmitter **24** via a transmit antenna **36** to the plurality of wireless information devices **38** such as the wireless information device **30** on at least one outbound radio frequency (RF) channel **40.** The message **32** or the information message **34** can be, for example, a data message or a voice call. Similarly, the system controller **22** receives and decodes inbound messages such as the acknowledgement message **42** or the query message **44** received by the radio frequency receiver **26** via the receive antenna **46** on at least one inbound radio frequency (RF) channel **48** from one of the plurality of wireless information devices **38.** The acknowledgement message **42** or the query message **44** can be, for example, a data message, a reply to a data message, a voice call, or a reply to a voice call.

It will be appreciated by one of ordinary skill in the art that the wireless information communication system **10,** in accordance with the present invention, can function utilizing any wireless RF channel, for example, a one or two-way pager channel, a mobile cellular telephone channel, a WPAN or WLAN channel, or a mobile radio channel. Similarly, it will be appreciated by one of ordinary skill in the art that the wireless information communication system **10** can function utilizing other types of communication channels such as infrared channels. In the following description, the term "wireless information communication system" refers to any of the wireless information communication systems mentioned above or an equivalent.

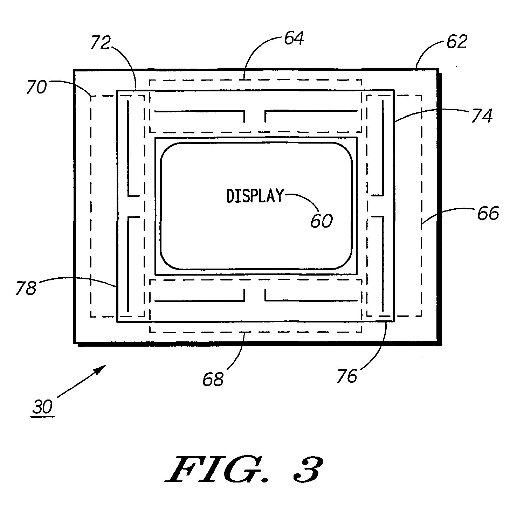

FIG. **3** illustrates the wireless information device **30** for use within the wireless information communication system **10** of FIG. **1** or FIG. **2**. It will be appreciated by one of ordinary skill in the art that FIG. 3 is illustrative of each of the plurality of wireless information devices **38** assigned for use in the wireless information communication system **10.** The wireless information device **30,** as illustrated in FIG. **3** includes a display **60** and an antenna system **62.** The antenna system **62,** in accordance with the present invention includes multiple antennas widely separated in the wireless information device **30.** Preferably, the antenna system **62** includes a first antenna **64,** a second antenna **66,** a third antenna **68,** and a fourth antenna **70.** The first antenna **64** is preferably located near and parallel to a top side **72** of the wireless information device **30.** The second antenna **66** is preferably located near and parallel to a right side **74** of the wireless information device **30.** The third antenna **68** is preferably located near and parallel to a bottom side **76** of the wireless information device **30.** The fourth antenna **70** is preferably located near and parallel to a left side **78** of the wireless information device **30.** The first antenna **64** and the third antenna 68 are substantially parallel to each other. The second antenna **66** and the fourth antenna **70** are substantially parallel to each other. The first antenna **64** and the third antenna **68** are substantially perpendicular to the second antenna 66 and the fourth antenna **70.** The first antenna **64,** the second antenna 66, the third antenna **68,** and the fourth antenna **70** surround the circumference of the display **60.**

It will be appreciated by one skilled in the art that the antenna system **62** in accordance with the present invention can be formed as described herein or in an equivalent manner. For example, the antenna system **62** as illustrated in FIG. **3** uses four antennas placed in two different orientations. Other orientations and quantities of antennas can be used within the spirit of the present invention. For example, the wireless information device **30** can use two directional antennas that are oriented in generally opposing directions relative to a point in the device.

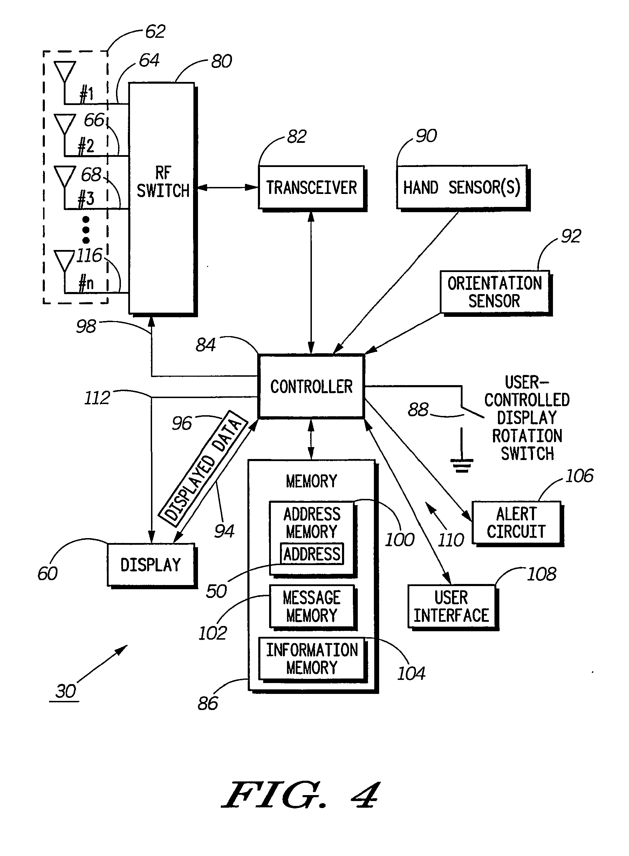

FIG. **4** is electronic block diagram of a preferred embodiment of the wireless information device **30** for use within the wireless information communication system **10.** It will be appreciated by one of ordinary skill in the art that the electronic block diagram of FIG. **3** is illustrative of each of the plurality of wireless information devices **38** assigned for use in the wireless information communication system **10.**

Referring to FIG. **4,** the wireless information device **30** includes the antenna system **62,** a radio frequency (RF) switch **80,** a transceiver **82,** a controller **84,** a memory **86,** the display **60,** an alert circuit **106,** a user interface **108,** and a user controlled display rotation switch **88.** The wireless information device **30** preferably also includes a plurality of hand sensors **90** and an orientation sensor **92.**

The antenna system **62** intercepts transmitted signals from the wireless information communication system **10.** The antenna system **62** is coupled to the transceiver **82** through the RF switch **80.** The transceiver **82** employs conventional demodulation techniques for receiving the communication signals transmitted by the wireless information communication system **10** such as the message **32** or the information message **34** of FIG. 1. Further, the transceiver **82** is responsive to commands from the controller **84.** When the transceiver **82** receives a command from the controller **84,** the transceiver **82** sends a signal via the antenna system **62** to the wireless information communication system **10** such as the acknowledgement message **42** or the query message **44** (see FIG. 1).

In an alternative embodiment (not shown), the wireless information device **30** includes a receiver circuit and a transmitter circuit for performing the functionality of the transceiver **82.** It will be appreciated by one of ordinary skill in the art that other similar electronic block diagrams of the same or alternate type can be utilized for the wireless information device **30** to handle the requirements of the transceiver **82.**

Coupled to the transceiver **82** is the controller **84** utilizing conventional signal processing techniques for processing received messages. Preferably, the controller **84** is similar to the MC68328 micro-controller manufactured by Motorola, Inc. of Schaumburg, Illinois. It will be appreciated by one of ordinary skill in the art that other similar processors can be utilized for the controller **84,** and that additional processors of the same or alternative type can be utilized as required to handle the processing requirements of the controller **84.**

The controller **84** decodes an address in the demodulated data of the received message, compares the decoded address with one or more addresses such as the address **50** stored in an address memory **100** of the memory **86;** and when a match is detected, proceeds to process the remaining portion of the received message.

To perform the necessary functions of the wireless information device **30,** the controller **84** is coupled to the memory **86,** which preferably includes a random access memory (RAM), a read-only memory (ROM), and an electrically erasable programmable read-only memory (EEPROM)(not shown). The memory **86** also includes the address memory **100,** a message memory **102,** and an information memory **104.**

Once the controller **84** has processed a received message such as the message **32,** it stores the decoded message in the message memory **102.** The received message, for example, can be a notification of an update to a web page ready for download or a notification of the availability of a new electronic book. It will be appreciated by one of ordinary skill in the art that the message memory **102,** in accordance with the present invention, can be a voicemail box or a group of memory locations in a data storage device. In the following description, the term "message memory" refers to any of the memory means mentioned above or an equivalent.

Once the controller **84** has processed a received information message such as the information message **34,** it stores the decoded information included in the information message **34** in the information memory **104.** The decoded information can be, for example, an electronic book, a web page, or an Internet document. It will be appreciated by one of ordinary skill in the art that the information memory **104,** in accordance with the present invention, can be a group of memory locations in a data storage device. In the following description, the term "message memory" refers to any of the memory means mentioned above or an equivalent.

Upon receipt and processing of the message **32** or the information message **34,** the controller **84** preferably generates a display command **94** to the display **60** to generate a visual notification of the receipt and storage of the message or the information. When the display **60** receives the display command **94** from the controller **84** that the message has been received and stored, a message indication is displayed. The message indication, for example can be the activation of one of a plurality of message icons on the display **60.** The display **60** can be, for example, a liquid crystal display utilized to display text. It will be appreciated by one of ordinary skill in the art that other similar displays such as dot matrix displays can be utilized for the display **60.**

Alternatively, upon receipt and processing of the message **32** or the information message **34,** the controller **84** generates the display command 94 to the display **60** to generate a visual image substantially representing at least a portion of the information received in the message **32** or the information message **34.**

Upon receipt and processing of the message **32** or the information message **34,** the controller **84** preferably also generates a command signal to the alert circuit **106** to notify the device user that the message has been received and stored. The alert circuit **106** can include a speaker (not shown) with associated speaker drive circuitry capable of playing melodies and other audible alerts, a vibrator (not shown) with associated vibrator drive circuitry capable of producing a physical vibration, or one or more LEDs (not shown) with associated LED drive circuitry capable of producing a visual alert. It will be appreciated by one of ordinary skill in the art that other similar alerting means as well as any combination of the audible, vibratory, and visual alert outputs described can be used for the alert circuit **106.**

Preferably, the user interface **108** is coupled to the controller **84,** as shown in FIG. 4. The user interface **108** can be one or more buttons used to generate a button press, a series of button presses, a voice response from the device user, or some other similar method of manual response initiated by the device user of the wireless information device **30.** The controller **84** is responsive to signals received from the user interface **108.**

Upon receipt of a user interface signal **110** from the user interface **108,** including instructions to display a particular information data stored in the message memory **102** or in the information memory **104,** the controller **84** is programmed to send the display command **94** to the display **60** including a plurality of displayed data **96** received in the message **32** or information message **34** and stored in the message memory **102** or in the information memory **104.** The display **60,** in response to receipt of the plurality of displayed data **96,** generates a visual display that substantially represents at least a portion of the information.

Upon receipt of the user interface signal **110** from the user interface **108,** including instructions to query the information server **54** of FIG. 2, the controller **84** commands the transceiver **82** to send a signal via the antenna system **62** to the wireless information communication system **10** such as the acknowledgement message **42** or the query message **44.** Preferably, the controller **84** also sends the display command **94** to the display **60** to modify the displayed image, indicating to the user that action was taken in response to user interface signal **110.** It will be appreciated by one of ordinary skill in the art that, the controller can send the display command **94** to the display **60** independently rather than in response to either the user interface signal **110,** the message **32,** or the information message **34.**

To perform the necessary functions of the wireless information device **30,** the controller **84** is coupled to the RF switch **80.** The controller **84** controls the RF switch **80** by sending an antenna control signal **98** to the RF switch **80.** Upon receipt of the antenna control signal **98,** the RF switch **80** determines which of the multiple antennas of the antenna system **62** is an active antenna **116.** The antenna switching of the antenna system **62** is preferably based on factors other than qualities of the radio frequency communications link.

In one embodiment, the user-controlled display rotation switch **88** is coupled to the controller **84.** The device user opens and closes the user-controlled display rotation switch **88** dependent upon which orientation of the display **60** is desired and/or required. In other words, the user-controlled display rotation switch **88** changes modes from open to close or from close to open dependent upon which orientation of the display **60** is desired and/or required. In response, the controller **84** sends a display orientation control signal **112** to the display **60.** In response to receipt of the display orientation control signal **112,** the display **60** modifies its display orientation. Further, the controller **84** sends the antenna control signal **98** to the RF switch **80** identifying the new display orientation. The RF switch **80,** in response to receipt of the antenna control signal **98,** switches which of the plurality of antennas of the antenna system **62** is the active antenna **116** to the one most likely to have optimum performance.

Alternatively, the orientation sensor **92** is coupled to the controller **84.** The orientation sensor **92** determines the orientation of the display **60** and notifies the controller **84** accordingly. In response, the controller **84** sends the antenna control signal **98** to the RF switch **80** identifying the display orientation. The RF switch **80,** in response to receipt of the antenna control signal **98,** switches which of the plurality of antennas of the antenna system **62** is the active antenna **116** to the one most likely to have optimum performance. Typically, the antenna of the antenna system **62** located at the top of the display **60** based on the display orientation is chosen as the active antenna **116,** that being the antenna most likely to be free of the hands and away from the body. Preferably, the orientation sensor **92** is sensitive to gravity and can be, for example, a set of mercury switches that determine the direction of "up" and "down". It will be appreciated by one of ordinary skill in the art that other similar gravity sensitive detection means, as well as other orientation determination means, can be used for the orientation sensor **92.** It will be appreciated by one skilled in the art that a certain amount of hysteresis would be needed to control unnecessary switching between antennas in certain orientations (i.e.: when the wireless information device 30 is lying flat on a table).

Alternatively, the plurality of hand sensors **90** is coupled to the controller **84.** Each of the plurality of hand sensors **90** can be, for example, capacitive sensors or phototransistors. It will be appreciated by one of ordinary skill in the art that other similar hand sensor means as well as any combination of those described can be used for the plurality of hand sensors **90.** Each of the plurality of hand sensors **90** is placed near each antenna. The controller **84** receives a signal from each of the plurality of hand sensors 90 indicating the amount of obstruction related to the associated antenna. The controller **84** then chooses the antenna with the hand sensor indicating the least obstruction (the lowest capacitance or the most light, relative to the other sensors in the wireless information device **30)** to be the active antenna **116.** It will be appreciated by one skilled in the art that a certain amount of hysteresis would be needed to control undesired switching between two antennas with similar sensor values. The controller **84** then sends the antenna control signal **98** to the RF switch **80** identifying the active antenna **116.** The RF switch **80,** in response to receipt of the antenna control signal **98,** switches the active antenna **116** of the antenna system **62** to the one most likely to have optimum performance as specified by the controller **84.**

It will be appreciated by one skilled in the art that the controller **84** can combine the methods described herein to determine the optimum antenna to be utilized. For example, the controller **84** can use the display orientation method to make a decision if the spatial orientation method provides indeterminate results (i.e.: when the wireless information device **30** is lying flat on a table).

The user may, through a "preferences" entry of the user interface **108,** modify the above antenna selection criteria to cover special circumstances. For example, the user may wish to modify the hand detection algorithm under unusual lighting conditions, if the phototransistor method of hand detection is used.

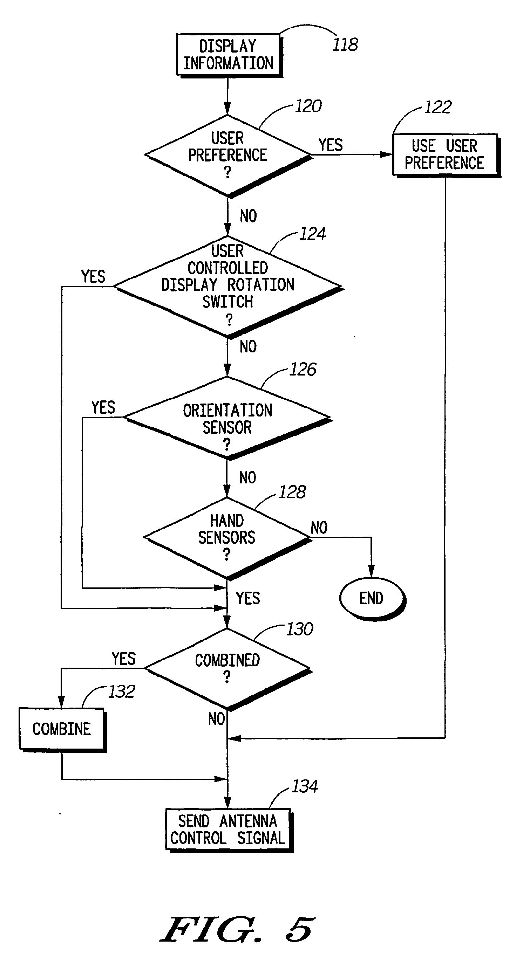

FIG. **5** is a flowchart illustrating one embodiment of the operation of the controller **84** of the wireless information device **30** of FIG. **4** in accordance with the present invention. Specifically, FIG. 5 illustrates the operation of the controller **84** in determining the information to be sent in the antenna control signal **98** to the RF switch **80.** It will be appreciated by one of ordinary skill in the art that the operation in FIG. **5** is illustrative of the operation of the plurality of wireless information devices **38** assigned for use in the wireless information communication system **10.**

Referring to FIG. **5****,** in Step **118,** the wireless information device **30** displays information on the display **60.** For example, display **60,** in response to receipt of the plurality of displayed data **96** from the controller **84** generates a visual display of the information. Next, in Step **120,** the controller **84** determines if a user preference has been identified. The user may, through a "preferences" entry of the user interface **108,** modify the above antenna selection criteria to cover special circumstances. When a user preference has been received by the controller **84** through the user interface **108,** in Step **122** the user preference is implemented. In Step **124,** when no user preference has been received by the controller **84,** the controller **84** determines whether the user controlled display rotation switch **88** has been utilized. In Step **126,** when no activity is detected on the user controlled display rotation switch **88,** the controller **84** determines whether an orientation sensor **92** is present and active. In Step **128,** when the orientation sensor **92** is not present or the orientation sensor **92** is not active, the controller **84** determines whether the plurality of hand sensors **90** are present or active. When the plurality of hand sensors **90** are not present or not active, the process ends.

In Step **130,** when either the user controlled display rotation switch 88 is utilized in Step **124,** or the orientation sensor **92** is active in Step **126,** or the plurality of hand sensors **90** are active in Step **128,** the controller **84** determines whether it has been programmed to combine some combination of these inputs. In Step **132,** when a combination is required or desired, the controller **84** combines inputs from more than one of the inputs. Next, in Step **134,** and when no combination is required or desired in Step **130,** and also when the user preference is used from Step **122,** the controller **84** sends the antenna control signal **98** to the RF switch **80.**

The present invention, as described herein provides an efficient and effective antenna system for use with a wireless information device. The present invention provides, within the wireless information device, a method and apparatus for automatically switching between a plurality of antennas each oriented in a different direction to provide enhanced communications performance within a wireless communication system.

Although the invention has been described in terms of preferred embodiments, it will be obvious to those skilled in the art that various alterations and modifications may be made without departing from the invention. Accordingly, it is intended that all such alterations and modifications be considered as within the scope of the invention as defined by the appended claims.

## Claims

1. A wireless information device (30) comprising:
an antenna system (62) having a plurality of antennas and operable to intercept a wireless signal, the wireless signal including at least a message;
a switch (80) coupled to the antenna system (62) and operable to select one antenna of the plurality of antennas as an active antenna in response to an antenna control signal (98);
means (82), coupled to the switch (80), for demodulating the wireless signal to retrieve the message;
a display (60) operable to display the message, wherein the display (60) is moveable in a plurality of orientations within a single plane defined by the display and including a landscape format orientation and a portrait format orientation; and
a controller coupled to the switch (80), the means (82) for demodulating, and the display (60),
**characterized by** the controller (84) operable to determine an orientation of the display within the plane and generate the antenna control signal (98) based at least on the orientation of the display within the plane, the controller (84) further operable to process the message to facilitate display thereof on the display (50).

2. A wireless information device (30) as recited in Claim 1, further comprising:
a user controlled display rotation switch (88) coupled to the controller (84), wherein the controller (84) is further operable to determine the orientation of the display within the plane based on a mode of the user controlled display rotation switch (88).

3. A wireless information device (30) as recited in Claim 2 wherein the controller (84) is further operable to send a display orientation signal to the display (60) in response to a change in mode of the user controlled display rotation switch (88), and wherein the display (60) is further operable to change orientation of a displayed message within the plane in response to receipt of the display orientation signal.

4. A wireless information device (30) as recited in Claim 1, further comprising:
a plurality of hand sensors (90) coupled to the controller (84), wherein the controller (84) is further operable to receive a signal from at least one of the plurality of hand sensors (90) and generate the antenna control signal (98) in response to the signal from at least one of the plurality of hand sensors (90).

5. A wireless information device (30) as recited in Claim 1, further comprising:
an orientation sensor (92) coupled to the controller (84) and operable to generate a signal indicating the orientation of the display within the plane, wherein the controller (84) is further operable to receive the signal from the orientation sensor (92) and generate the antenna control signal (98) in response to the signal from the orientation sensor (92).

6. A method for selecting one of a plurality of antennas for use by a wireless information device comprising:
determining an orientation of a display of the wireless information device; and
selecting an antenna of the plurality of antennas to receive a wireless signal based at least on the orientation of the display of the wireless information device,
**characterized by** the orientation being one of a plurality of orientations within a single plane defined by the display and including a landscape format orientation and a portrait format orientation.

7. A method as recited in Claim 6, wherein the determining comprises:
determining the orientation of the display based on input from a user of the wireless information device.

8. A method as recited in Claim 6, wherein the determining comprises:
determining the orientation of the display automatically without input from a user of the wireless information device .

9. A method as recited in Claim 6, further comprising:
determining a position of at least one hand of a user of the wireless information device relative to positions of the plurality of antennas;
wherein the step of selecting an antenna comprises selecting an antenna of the plurality of antennas to receive the wireless signal based at least on the orientation of the display of the wireless information device and the position of at least one hand of a user of the wireless information device relative to the position of the plurality of antennas.

## Patentansprüche

1. Drahtlose Informationsvorrichtung (30), welche Folgendes aufweist:
ein Antennensystem (62), welches eine Vielzahl von Antennen aufweist und betriebsbereit ist, um ein drahtloses Signal aufzufangen, wobei das drahtlose Signal mindestens eine Nachricht einschließt;
einen Schalter (80), welcher mit dem Antennensystem (62) verbunden ist und betriebsbereit ist, um ansprechend auf ein Antennen-Steuersignal (98) eine Antenne aus der Vielzahl von Antennen als aktive Antenne auszuwählen;
eine mit dem Schalter (80) gekoppelte Einrichtung (82) zur Demodulation des drahtlosen Signals, um die Nachricht abzurufen;
ein Display (60), welches zur Anzeige der Nachricht betriebsbereit ist, wobei das Display (60) in eine Vielzahl von Richtungen innerhalb einer durch das Display definierten einzigen Ebene beweglich ist, und eine Querformat-Ausrichtung und eine Hochformat-Ausrichtung einschließt; und
eine mit dem Schalter (80), der Demodulationseinrichtung (82) und dem Display (60) gekoppelte Steuereinrichtung;
**dadurch gekennzeichnet, dass** die Steuereinrichtung (84) betriebsbereit ist, um eine Ausrichtung des Displays innerhalb der Ebene zu bestimmen und das Antennen-Steuersignal (98) basierend auf zumindest der Ausrichtung des Displays in der Ebene zu erzeugen, wobei die Steuereinrichtung (84) des Weiteren betriebsbereit ist, um die Nachricht zu bearbeiten, damit diese leichter auf dem Display (60) angezeigt werden kann.

2. Drahtlose Informationsvorrichtung (30) nach Anspruch 1, welche des Weiteren Folgendes aufweist:
einen vom Benutzer gesteuerten Display-Drehrichtungsschalter (88), welcher mit der Steuereinrichtung (84) gekoppelt ist, **dadurch gekennzeichnet, dass** die Steuereinrichtung (84) des Weiteren betriebsbereit ist, um die Ausrichtung des Displays in der Ebene basierend auf einem Modus des benutzergesteuerten Display-Drehrichtungsschalters (88) zu bestimmen.

3. Drahtlose Informationsvorrichtung (30) nach Anspruch 2, **dadurch gekennzeichnet, dass** die Steuereinrichtung (84) des Weiteren betriebsbereit ist, um ein Display-Ausrichtungssignal an das Display (60) ansprechend auf einen Moduswechsel des benutzergesteuerten Display-Drehrichtungsschalters (88) zu senden, und dass das Display (60) des Weiteren betriebsbereit ist, um eine Ausrichtung einer angezeigten Nachricht in der Ebene ansprechend auf den Empfang des Display-Ausrichtungssignals zu verändern.

4. Drahtlose Informationsvorrichtung (30) nach Anspruch 1, welche des Weiteren Folgendes aufweist:
eine Vielzahl von Handsensoren (90), welche mit der Steuereinrichtung (84) gekoppelt ist, **dadurch gekennzeichnet, dass** die Steuereinrichtung (84) des Weiteren betriebsbereit ist, um ein Signal von mindestens einem der Vielzahl von Handsensoren (90) zu empfangen und das Antennen-Steuersignal (98) ansprechend auf das Signal von mindestens einem der Vielzahl von Handsensoren (90) zu erzeugen.

5. Drahtlose Informationsvorrichtung (30) nach Anspruch 1, welche des Weiteren Folgendes aufweist:
einen Ausrichtungs-Sensor (92), welcher mit der Steuereinrichtung (84) gekoppelt ist, und betriebsbereit ist, um ein Signal zu erzeugen, welches die Ausrichtung des Displays in der Ebene anzeigt, **dadurch gekennzeichnet, dass** die Steuereinrichtung (84) des Weiteren betriebsbereit ist, um das Signal von dem Ausrichtungs-Sensor (92) zu empfangen und das Antennen-Steuersignal (98) ansprechend auf das Signal von dem Ausrichtungs-Sensor (92) zu erzeugen.

6. Verfahren zur Auswahl einer Antenne aus der Vielzahl von Antennen zur Verwendung durch eine drahtlose Informationsvorrichtung, wobei das Verfahren die folgenden Schritte aufweist:
Bestimmung einer Ausrichtung eines Displays der drahtlosen Informationsvorrichtung; und
Auswahl einer Antenne der Vielzahl von Antennen für den Empfang eines drahtlosen Signals basierend auf zumindest der Ausrichtung des Displays der drahtlosen Informationsvorrichtung,
**dadurch gekennzeichnet, dass** die Ausrichtung eine aus einer Vielzahl von Ausrichtungen in einer einzigen durch das Display definierten Ebene ist, und eine Querformat-Ausrichtung und eine Hochformat-Ausrichtung einschließt.

7. Verfahren nach Anspruch 6, **dadurch gekennzeichnet, dass** die Bestimmung den folgenden Schritt aufweist:
Bestimmung der Ausrichtung des Displays basierend auf einer Eingabe durch einen Benutzer der drahtlosen Informationsvorrichtung.

8. Verfahren nach Anspruch 6, **dadurch gekennzeichnet, dass** die Bestimmung den folgenden Schritt aufweist:
Automatische Bestimmung der Ausrichtung des Displays ohne eine Eingabe durch einen Benutzer der drahtlosen Informationsvorrichtung.

9. Verfahren nach Anspruch 6, welches des Weiteren den folgenden Schritt aufweist:
Bestimmung einer Position mindestens einer Hand eines Benutzers der drahtlosen Informationsvorrichtung relativ zu Positionen der Vielzahl von Antennen;
**dadurch gekennzeichnet, dass** der Schritt der Auswahl einer Antenne den Schritt der Auswahl einer Antenne aus der Vielzahl von Antennen aufweist, um das drahtlose Signal basierend auf zumindest der Ausrichtung des Displays der drahtlosen Informationsvorrichtung und der Position mindestens einer Hand eines Benutzers der drahtlosen Informationsvorrichtung relativ zu der Position der Vielzahl von Antennen zu empfangen.

## Revendications

1. Dispositif d'information sans fil (30) comprenant:
un système d'antennes (62) ayant une pluralité d'antennes et apte à intercepter un signal sans fil, le signal sans fil incluant au moins un message;
un commutateur (80) couplé au système d'antennes (62) et apte à sélectionner une antenne de la pluralité d'antennes comme antenne active en réponse à un signal de commande d'antenne (98);
un moyen (82), couplé au commutateur (80), pour démoduler le signal sans fil pour extraire le message;
un écran (60) apte à afficher le message, où l'écran (60) est déplaçable dans une pluralité d'orientations dans un seul plan défini par l'affichage et incluant une orientation de format de paysage et une orientation de format de portrait; et
un dispositif de commande couplé au commutateur (80), au moyen de démodulation (82) et à l'écran (60),
**caractérisé en ce que** le dispositif de commande (84) est apte à déterminer une orientation de l'affichage dans le plan et à produire le signal de commande d'antenne (98) basé au moins sur l'orientation de l'écran dans le plan, le dispositif de commande (84) étant apte en outre à traiter le message pour faciliter son affichage sur l'écran (60).

2. Dispositif d'information sans fil (30) selon la revendication 1, comprenant en outre:
un commutateur de rotation d'écran commandé par l'utilisateur (88) couplé au dispositif de commande (84), où le dispositif de commande (84) est en outre apte à déterminer l'orientation de l'écran dans le plan sur la base d'un mode du commutateur de rotation d'écran commandé par l'utilisateur (88).

3. Dispositif d'information sans fil (30) selon la revendication 2, dans lequel le dispositif de commande (84) est en outre apte à émettre un signal d'orientation d'écran à l'écran (60) en réponse à un changement de mode du commutateur de rotation d'écran commandé par l'utilisateur (88), et où l'écran (60) est apte en outre à changer l'orientation d'un message affiché dans le plan en réponse à la réception du signal d'orientation d'écran.

4. Dispositif d'information sans fil (30) selon la revendication 1, comprenant en outre:
une pluralité de capteurs à main (90) couplés au dispositif de commande (84), où le dispositif de commande (84) est en outre apte à recevoir un signal d'au moins un de la pluralité de capteurs à main (90) et à produire le signal de commande d'antenne (98) en réponse au signal d'au moins un de la pluralité de capteurs à main (90).

5. Dispositif d'information sans fil (30) selon la revendication 1, comprenant en outre:
un capteur d'orientation (92) couplé au dispositif de commande (84) et apte à produire un signal indiquant l'orientation de l'écran dans le plan, où le dispositif de commande (84) est en outre apte à recevoir le signal du capteur d'orientation (92) et à produire le signal de commande d'antenne (98) en réponse au signal du capteur d'orientation (92).

6. Procédé de sélection d'une d'une pluralité d'antennes pour utilisation par un dispositif d'information sans fil comprenant:
déterminer une orientation d'un écran du dispositif d'information sans fil; et
sélectionner une antenne de la pluralité d'antennes pour recevoir un signal sans fil basé au moins sur l'orientation de l'écran du dispositif d'information sans fil,
**caractérisé en ce que** l'orientation est une d'une pluralité d'orientations dans un plan unique défini par l'écran et incluant une orientation de format de paysage et une orientation de format de portrait.

7. Procédé selon la revendication 6, dans lequel la détermination comprend:
la détermination de l'orientation de l'écran sur la base de l'entrée d'un utilisateur du dispositif d'information sans fil.

8. Procédé selon la revendication 6, dans lequel la détermination comprend:
déterminer l'orientation de l'écran automatiquement sans entrée d'un utilisateur du dispositif d'information sans fil.

9. Procédé selon la revendication 6, comprenant en outre:
déterminer une position d'au moins une main d'un utilisateur du dispositif d'information sans fil relativement à des positions de la pluralité d'antennes;
où l'étape de sélection d'une antenne comprend la sélection d'une antenne de la pluralité d'antennes pour recevoir le signal sans fil basé au moins sur l'orientation de l'écran du dispositif d'information sans fil et de la position d'au moins une main d'un utilisateur du dispositif d'information sans fil relativement à la position de la pluralité d'antennes.
